# FASCICULE DE BREVET EUROPEEN

(11) **EP 2 930 083 B1**
(45) Date de publication et mention de la délivrance du brevet: **16.09.2020**
(21) Numéro de dépôt: 15158162.6
(22) Date de dépôt: 09.03.2015
(51) Int. Cl.: B61C 15/12

(54) **Procédé et système de contrôle de l'adhérence rail-roue d'un véhicule ferroviaire et véhicule ferroviaire mettant en oeuvre un tel procédé/système**
Kontrollverfahren und -system der Schienen-Rad-Haftung eines Schienenfahrzeugs, und Schienenfahrzeug, bei dem ein solches Verfahren/system Anwendung findet
Method and system for monitoring the rail-wheel adhesion of a rail vehicle and rail vehicle implementing such a method/system

(30) Priorité: 09.04.2014 FR 1453164
(43) Date de publication de la demande: 14.10.2015
(73) Titulaire: Société Nationale SNCF, 93200 Saint-Denis (FR)
(72) Inventeur: Goeres, David, 72000 Le Mans (FR)
(74) Mandataire: IPAZ

(56) Documents cités:
- WO-A2-2005/079504
- DE-A1-102011 011 443
- US-A- 5 841 254
- US-A- 6 012 011

## Description

L'invention concerne un procédé de contrôle de l'adhérence rail-roue d'un véhicule ferroviaire, tel qu'un train, un tramway, etc. Elle concerne également un système mettant en oeuvre un tel procédé et un véhicule ferroviaire équipé d'un tel procédé ou système.

Le domaine de l'invention est le domaine de la gestion de l'adhérence rail-roue d'un véhicule ferroviaire lors de la demande d'un effort sur les essieux moteurs, tel qu'un effort en traction ou un effort en freinage.

### Etat de la technique

Le contact rail/roue d'un véhicule ferroviaire ne permet pas de disposer d'une adhérence élevée propice à passer des efforts élevés comme dans l'automobile par exemple. Le niveau d'adhérence peut devenir très faible lorsque la surface du rail est couverte par de l'eau, de la neige ou de la pollution « grasse » lors des épisodes de chute de feuilles. Lorsque l'adhérence au niveau d'un essieu moteur est faible, ce dernier patine ce qui entraine une usure de la roue et de la voie qui peut devenir critique si le phénomène dure trop longtemps.

Plusieurs solutions ont été développées pour tenter de maîtriser le patinage d'un essieu, telles qu'une sablière qui injecte du sable entre le rail et la roue ou un dispositif d'anti-patinage qui abaisse automatiquement l'effort de traction d'un essieu moteur tant que ce dernier patine. Une autre solution consiste à augmenter le nombre d'essieux moteurs d'un train afin de répartir l'effort de traction nécessaire sur un plus grand nombre de roues. Enfin une dernière solution prévoit d'utiliser des véhicules spécifiques pour nettoyer les rails.

Une autre solution est proposée dans le document WO 2005/079504 A2, qui consiste à diminuer l'effort de consigne à un essieu moteur lorsqu'il y a patinage du fait d'une adhérence rail-roue dégradée.

Cependant, les solutions actuelles présentent toutes des inconvénients. Le dispositif d'anti-patinage est complexe à régler et ne permet pas de conserver le niveau d'adhérence global du véhicule, ce qui introduit des difficultés d'exploitation des véhicules dans les rampes et/ou à haute vitesse. La sablière impose une gestion laborieuse du remplissage des réservoirs de sable et du taux d'humidité du sable pour permettre son écoulement. De plus, à haute vitesse, l'injection précise du sable entre la roue et le rail est très difficile du fait des phénomènes aérauliques créés par la vitesse. De plus, dans les zones d'aiguillage ou zones souterraines le sablage est interdit. Enfin, la multiplication des essieux moteurs ou l'utilisation de véhicules spécifiques se traduit par un coût plus élevé.

L'invention a pour but de pallier les inconvénients précités.

Un autre but de l'invention est de proposer un procédé et un système de contrôle de l'adhérence rail-roue d'un véhicule ferroviaire plus simple à utiliser tout en permettant de limiter une perte d'adhérence globale du véhicule, voire de la conserver.

Un autre but de l'invention est de proposer un procédé et un système de contrôle de l'adhérence rail-roue d'un véhicule ferroviaire moins couteux tout en permettant de limiter une perte d'adhérence globale du véhicule, voire de la conserver.

Enfin, un autre but de l'invention est de proposer un procédé et un système de contrôle de l'adhérence rail-roue d'un véhicule ferroviaire qui peut être utilisé sans limitation de zones ou de vitesse tout en permettant de limiter une perte d'adhérence globale du véhicule, voire de la conserver.

### Exposé de l'Invention

L'invention permet d'atteindre au moins l'un des buts précités par un procédé de contrôle de l'adhérence rail-roue d'un véhicule ferroviaire comprenant au moins deux essieux moteurs, ledit procédé comprenant les démarches décrites dans la revendication 1.

Ainsi, le procédé selon l'invention propose de redistribuer l'effort global appliqué à un véhicule au niveau des essieux moteurs du véhicule, lorsque l'adhérence se dégrade, c'est-à-dire lorsque l'adhérence diminue, au niveau d'un des essieux moteurs.

Le procédé selon l'invention permet donc de limiter une perte d'adhérence globale du véhicule, voire de conserver l'adhérence globale du véhicule, au même titre qu'une sablière.

En même temps, le procédé selon l'invention est simple d'utilisation car il peut être entièrement automatisé et totalement transparent pour l'opérateur du véhicule, comparé à une opération de sablage qui doit être très précise et qui nécessite la prise en compte de nombreux paramètres.

De plus, le procédé selon l'invention peut être mis en œuvre par des moyens électroniques peu couteux et faciles à entretenir en comparaison avec une opération de sablage qui nécessite un équipement lourd, coûteux à installer et à entretenir : un réservoir de sable, des circuits d'acheminement de sable au niveau de la jonction rail-roue, injecteur de sable, etc.

En outre, le procédé selon l'invention peut être mis en œuvre pour contrôler l'adhérence globale d'un véhicule sur toutes les zones d'une voie ferrée, y compris les zones d'aiguillage et les zones souterraines, et quelle que soit la vitesse du véhicule ferroviaire y compris à haute-vitesse.

Suivant une version préférée du procédé selon l'invention, l'étape de redistribution d'efforts peut être réalisée de sorte que la somme des efforts demandés à l'ensemble des essieux moteurs dudit véhicule ferroviaire reste sensiblement inchangée, c'est-à-dire de sorte que l'adhérence globale du véhicule ferroviaire est conservée.

Dans cette version, le procédé selon l'invention permet d'annuler les impacts d'une perte d'adhérence au niveau d'un essieu moteur du véhicule, sur le fonctionnement global et l'exploitation du véhicule ferroviaire : pas de retard pour parcourir un trajet, pas de difficulté pour monter ou descendre une rampe, etc.

Selon un mode de réalisation préféré, l'étape de redistribution d'efforts peut comprendre une augmentation de l'effort demandé à au moins un essieu moteur se trouvant en aval de l'au moins un essieu dégradé par rapport au dernier sens de circulation connu du véhicule ferroviaire.

Ce mode de réalisation permet un meilleur rétablissement de l'adhérence globale du véhicule ferroviaire. En effet, en considérant le dernier sens de circulation connu, les roues des essieux en aval se trouvent sur une portion de voie ferrée qui a déjà été parcourue par les roues des essieux amont. Par conséquent, les phénomènes qui sont l'origine de la perte d'adhérence des essieux amont, tels que la présence d'eau, de feuilles etc., ont été diminués, voire supprimés, par le passage sur cette portion des essieux amont. Par conséquent, les essieux aval profitent sur cette portion de voie ferrée d'une meilleure adhérence, voire d'une adhérence totale.

Avantageusement, par rapport au dernier sens de circulation connu du véhicule ferroviaire, l'effort peut être diminué au niveau d'au moins un essieu moteur, en particulier de tous les essieux moteurs, d'un bogie se trouvant à l'avant du véhicule ferroviaire et augmenté au niveau d'au moins un essieu moteur, en particulier de tous les essieux moteurs, d'un bogie se trouvant à l'arrière du véhicule ferroviaire.

En effet, pour une portion de voie ferrée, le ou les essieux se trouvant à l'arrière du train bénéficient d'une meilleure adhérence, voire d'une adhérence totale, comparé à tous les autres essieux (moteurs ou non) du véhicule, cette portion de voie ferrée ayant été « nettoyée » par le passage de tous les essieux (moteurs ou non) se trouvant devant.

L'effort peut également ou alternativement être augmenté au niveau d'au moins deux, en particulier de tous les, essieux moteurs autres que l'au moins un essieu dégradé. Dans ce cas, tous les essieux moteurs autres que l'au moins un essieu moteur dégradé participent à la limitation de la perte, voire au rétablissement, de l'adhérence globale du véhicule ferroviaire.

Selon un exemple de réalisation, l'effort peut être augmenté de manière uniforme au niveau d'au moins deux, en particulier de tous les, essieux moteurs autres que l'au moins un essieu dégradé.

Cet exemple de réalisation présente l'avantage d'être simple de réalisation.

Selon un autre exemple de réalisation, l'effort peut être augmenté au niveau d'au moins deux, en particulier de tous les, essieux moteurs autres que l'au moins un essieu dégradé en fonction de la position de chacun desdits au moins deux essieux moteurs.

Ce mode de réalisation permet de réaliser une meilleure redistribution des efforts car il prend en compte la position des essieux du véhicule.

En particulier, l'augmentation de l'effort peut être croissante dans le sens contraire au dernier sens de circulation connu du véhicule ferroviaire. Autrement dit, l'effort sera augmenté plus pour un essieu moteur se trouvant à l'arrière du train comparé à un essieu se trouvant au milieu du train, en tenant compte du dernier sens de circulation connu du véhicule ferroviaire.

Au niveau d'un essieu moteur, l'effort peut être diminué, respectivement augmenté, d'une valeur prédéterminée.

Dans ce cas, il n'est pas nécessaire de déterminer la valeur de l'adhérence d'un essieu. Dès qu'une perte d'adhérence est détectée sur un essieu, une quantité prédéterminée ou un pourcentage prédéterminé de l'effort initialement demandé à cet essieu est ajoutée automatiquement à l'effort demandé sur au moins un autre essieu moteur.

Alternativement, l'effort peut être diminué, respectivement augmenté, au niveau d'un essieu moteur, en fonction d'une donnée, dite coefficient de pondération, relative à l'adhérence rail-roue au niveau dudit essieu moteur, et notamment en fonction de l'adhérence rail-roue maximale au niveau dudit essieu moteur.

Cette alternative permet d'adapter la redistribution à chaque essieu de manière individuelle. Cette alternative suppose la mesure absolue ou relative de l'adhérence de chacun des essieux moteurs concernés par la redistribution.

L'étape de détection peut comprendre seulement une détection d'une perte d'adhérence d'au moins un essieu moteur.

Alternativement, ou en plus, l'étape de détection peut comprendre une détermination d'une donnée relative à une quantité/pourcentage d'adhérence perdue ou restante pour au moins un essieu moteur.

Alternativement, ou en plus, l'étape de détection peut comprendre une mesure d'une adhérence maximale d'au moins un, de préférence de chaque, essieu moteur du véhicule ferroviaire.

Suivant une version préférée, le procédé est mis en œuvre pour contrôler l'adhérence d'un véhicule ferroviaire, lors d'un effort de traction.

Bien entendu, l'invention n'est limitée à l'effort en traction et peut également être mise en œuvre pour contrôler l'adhérence d'un véhicule ferroviaire lors d'un effort en freinage.

Selon un autre aspect de l'invention, il est proposé un système d'aide/assistance à la conduite comprenant des moyens configurés pour mettre en œuvre les étapes du procédé selon l'invention.

Un tel système peut comprendre un module de détection d'une adhérence dégradée au niveau d'un essieu moteur d'un véhicule et un moyen de transfert d'une partie de l'effort demandé à cet essieu moteur dégradé vers au moins un autre essieu moteur du véhicule ferroviaire.

Selon un exemple de réalisation non limitatif, le système comprend :
- un module de détection et de mesure d'une adhérence maximale au niveau de chacun des essieux moteurs d'un véhicule ferroviaire,
- un module central, en communication avec chacun desdits modules de détection, pour :
   ∘ recevoir de chacun desdits modules de détection au moins une donnée relative à l'adhérence de l'essieu moteur associé,
   ∘ émettre vers un moteur associé audit essieu une donnée relative à une diminution ou une augmentation de l'effort demandé.

Selon encore un autre aspect de l'invention, il est proposé un véhicule ferroviaire équipé par un système selon l'invention.

Un tel véhicule ferroviaire peut être un train, un tram-train, etc.

D'autres avantages et caractéristiques apparaîtront à l'examen de la description détaillée des exemples nullement limitatifs, et des dessins annexés sur lesquels :
- les FIGURES 1 et 2 sont une représentation schématique d'un exemple non limitatif d'un procédé selon l'invention ;
- la FIGURE 3 est une représentation schématique d'un exemple non limitatif d'un système selon l'invention ;
- les FIGURES 4a et 4b sont une représentation schématique d'un premier exemple non limitatif de contrôle d'adhérence selon l'invention ; et
- les FIGURES 5a et 5b sont une représentation schématique d'un deuxième exemple non limitatif de contrôle d'adhérence selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

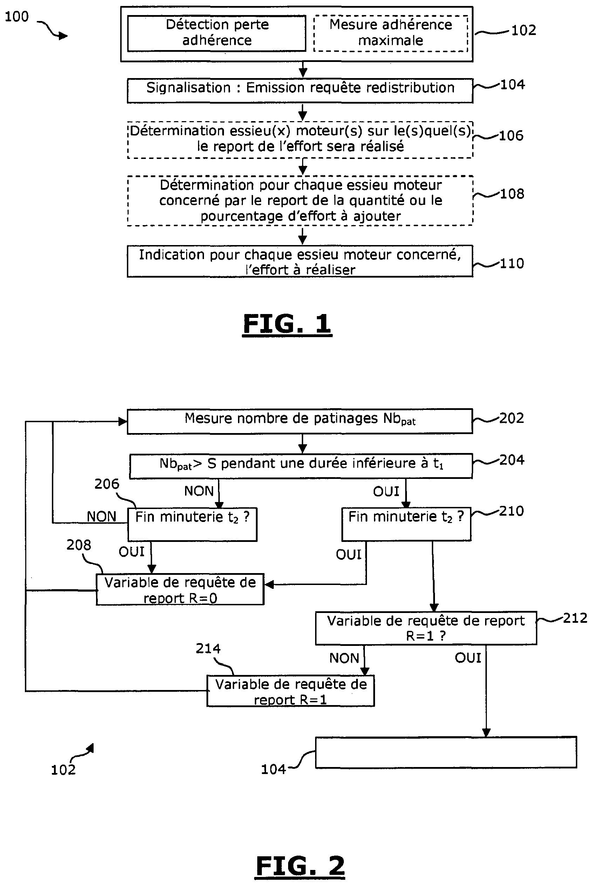

La FIGURE 1 est une représentation schématique d'un exemple de réalisation non limitatif d'un procédé selon l'invention.

Le procédé 100 représenté sur la FIGURE 1 est réalisé pour chaque essieu moteur concerné indépendamment.

Le procédé 100 comprend une étape 102 pour détecter une perte d'adhérence au niveau de l'essieu moteur. Cette étape 102 peut optionnellement comprendre une mesure de l'adhérence maximale au niveau de l'essieu.

Lorsqu'une perte d'adhérence est identifiée pour au moins un essieu moteur, dit essieu dégradé, une étape 104 signale la détection de la perte d'adhérence et réalise une émission d'une requête de report d'une partie de l'effort demandé sur cet essieu. La requête émise lors de l'étape 104 peut comprendre une demande de report d'effort seule, ou une demande report d'effort avec une précision de la quantité ou du pourcentage d'effort à reporter sur au moins un autre essieu moteur.

Lors d'une étape 106, optionnelle, le procédé détermine sur quel(s) essieu(x) moteur(s) le report doit avoir lieu. Pour ce faire, cette étape 106 peut comprendre :
- l'adhérence maximale au niveau de tous les essieux moteurs autres que l'essieu moteur dégradé, et
- la position de tous les essieux moteurs autres que l'essieu moteur dégradé, dans le sens de circulation du véhicule ferroviaire.

Lors d'une étape 108, optionnelle, le procédé détermine pour chacun des essieux moteurs choisi lors de l'étape 106, la quantité ou le pourcentage d'effort à ajouter à l'effort initialement demandé.

Lors d'une étape 110, le procédé indique à tous les essieux moteurs concernés par le report l'effort à réaliser, à savoir :
- pour l'essieu moteur dégradé, l'effort à réaliser après soustraction de l'effort reporté sur les autres essieux moteurs ; et
- pour le ou chacun des essieux autres que l'essieu moteur dégradé l'effort à réaliser après ajout de l'effort reporté vers cet essieu moteur.

Alternativement à l'exemple décrit sur la FIGURE 1, il est possible de ne pas mesurer l'adhérence maximale, ni de l'essieu dégradé, ni des autres essieux moteurs concernés par la redistribution de l'effort. Dans ce cas, une quantité ou un pourcentage prédéterminé est reporté vers un ou plusieurs essieux également prédéterminé(s) avec une distribution prédéterminée pour chaque essieu.

La FIGURE 2 est une représentation schématique d'un exemple de réalisation non limitatif d'une étape de détection de perte d'adhérence, telle que par exemple l'étape 102 décrite en référence à la FIGURE 1.

Une étape 202 mesure le nombre de patinage Nbₚₐₜ d'un essieu lors de la demande d'un effort.

Une étape 204 détermine si le nombre de patinage Nbₚₐₜ, mesuré pendant une durée inférieure à une durée seuil prédéterminée t₁, est supérieur ou égal à un nombre de patinage seuil prédéterminé S.

Si à l'étape 204, le nombre de patinage Nbₚₐₜ est supérieur à S pendant une durée inférieure à la durée seuil t₁ alors une étape 206 détermine s'il existe une minuterie comptant une durée seuil prédéterminée t₂ et dont le décompte n'est pas encore terminé.

Si à l'étape 206, il existe une minuterie comptant la durée seuil t₂ et que le décompte n'est pas terminé, alors l'étape 202 est réalisée à nouveau sur demande, ou à une fréquence prédéterminée, ou encore dès détection d'un nouveau patinage.

Si à l'étape 206, il existe une minuterie comptant la durée seuil t₂ et que le décompte est terminé, alors la valeur d'une variable de requête de report R est changée/maintenue à « 0 » lors d'une étape 208. Suite à l'étape 208, l'étape 202 est réalisée à nouveau sur demande, ou à une fréquence prédéterminée, ou encore dès détection d'un nouveau patinage.

Si à l'étape 204 le nombre de patinage Nbₚₐₜ mesuré pendant une durée inférieure à la durée seuil t₁ est supérieur à S alors, une étape 210 détermine s'il existe une minuterie comptant la durée seuil t₂ et si le décompte n'est pas terminé, de manière identique à l'étape 206.

Si à l'étape 210, il existe une minuterie comptant la durée seuil t₂ et que le décompte est terminé, alors l'étape 208 est réalisée pour mettre/conserver la valeur d'une variable de requête de report R à « 0 » 8.

Si à l'étape 210, il existe une minuterie comptant la durée seuil t₂ et que le décompte n'est pas terminé, alors une étape 212 teste la valeur de la variable de requête de report R.

Si à l'étape 212 la valeur de la variable de requête de report R est égale à 0 alors une étape 214 change la valeur de R à 1 et l'étape 202 est réalisée à nouveau sur demande ou à une fréquence prédéterminée, ou encore dès détection d'un nouveau patinage.

Si à l'étape 212 la valeur de la variable de requête de report R est égale à 1, alors cela veut dire qu'un nombre de patinages supérieur à S s'est produit deux fois pendant une durée inférieure à t2. Dans ce cas, l'étape 212 est suivie d'une étape de requête d'un report d'effort vers un autre essieu, telle que l'étape 104 du procédé 100 de la FIGURE 1.

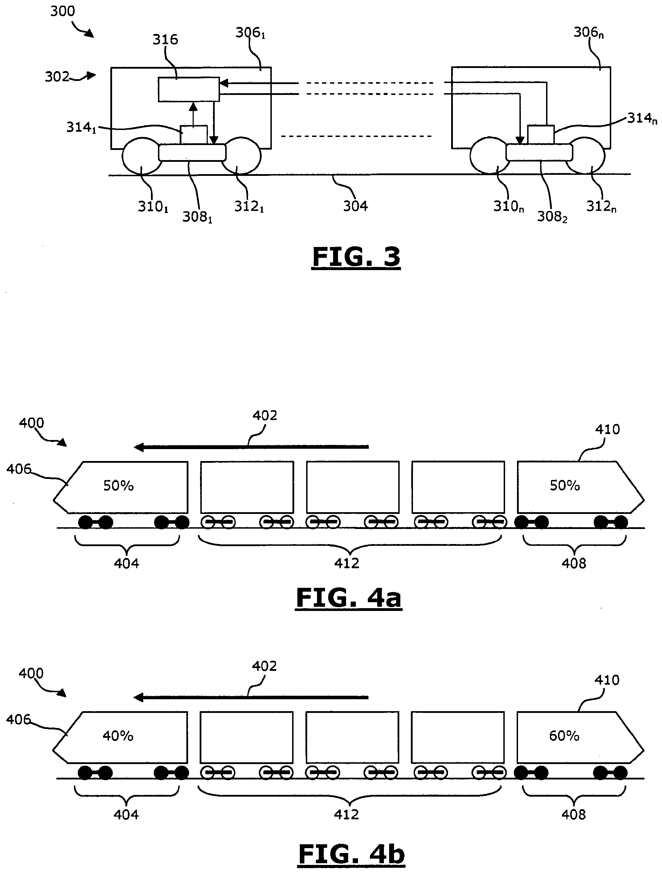

La FIGURE 3 est une représentation schématique d'un exemple non limitatif d'un système selon l'invention.

Le système 300 représenté sur la FIGURE 3 permet de contrôler l'adhérence rail-roue d'un train 302 roulant sur une voie ferrée 304 comprenant n voitures 306₁-306ₙ.

Chaque voiture 306ᵢ comprend un moteur 308ᵢ permettant de mouvoir deux essieux 310ᵢ et 312ᵢ.

Le système 300 comprend pour chaque voiture 306ᵢ un module 314ᵢ, dit de détection, réalisant une détection d'une perte d'adhérence et/ou une mesure de l'adhérence au niveau des essieux de la voiture 310ᵢ et 312ᵢ, par exemple selon l'étape 102 décrite en référence à la FIGURE 2.

Le système 300 comprend en outre un module central 316, agencé dans l'une des voitures 306ᵢ, à savoir dans la voiture 306₁ sur la FIGURE 3. Le module central 316 est relié à chacun des modules de détection 314₁-314ₙ et à chaque moteur 308₁-308ₙ par l'intermédiaire de connexion filaire ou non, par exemple par l'intermédiaire du réseau de communication électrique ou informatique présent dans le train 302.

Le module central 316 reçoit de chaque module de détection 314₁-314ₙ au moins une donnée relative à l'adhérence au niveau des essieux 310ᵢ et 312ᵢ, une telle donnée pouvant comprendre une combinaison quelconque des données suivantes :
- une donnée signalisation d'une perte d'adhérence rail-roue,
- une valeur d'adhérence rail-roue mesurée au niveau des essieux 310ᵢ et 312ᵢ,
- une valeur d'une quantité ou d'un pourcentage d'adhérence rail-roue perdue au niveau des essieux 310ᵢ et 312ᵢ ; et
- une valeur d'une quantité ou d'un pourcentage d'adhérence rail-roue restante au niveau des essieux 310ᵢ et 312ᵢ.

En fonction des données reçues, le module central 316 émet vers le moteur 308ᵢ de chaque voiture 306ᵢ une donnée relative à une redistribution d'effort, une telle donnée pouvant comprendre une combinaison quelconque des données suivantes :
- une donnée de signalisation d'une redistribution d'effort préalablement mémorisé au niveau du moteur 308ᵢ,
- une valeur d'adhérence rail-roue totale à réaliser au niveau des essieux 310ᵢ et 312ᵢ,
- une valeur d'une quantité ou d'un pourcentage d'adhérence rail-roue en plus à réaliser au niveau des essieux 310ᵢ et 312ᵢ ; et
- une valeur d'une quantité ou d'un pourcentage d'adhérence rail-roue en moins à réaliser au niveau des essieux 310ᵢ et 312ᵢ.

Dans l'exemple représenté sur la FIGURE 3 toutes les voitures du train sont équipées d'essieux moteurs. Alternativement, une partie seulement des voitures peuvent comprendre des essieux moteurs et donc être équipées de modules de détection.

De plus, dans l'exemple représenté sur la FIGURE 3 toutes les voitures du train sont équipées de deux essieux moteurs. Bien entendu, le nombre d'essieux moteurs d'une voiture peut être différent de deux. De plus, le nombre d'essieux moteurs d'une voiture peut être différent du nombre d'essieux moteurs d'une autre voiture.

Les FIGURES 4a et 4b sont une représentation schématique d'un premier exemple non limitatif de contrôle d'adhérence selon l'invention.

L'exemple décrit sur les FIGURES 4a et 4b concerne un train 400 selon l'invention circulant dans le sens indiqué par la flèche 402.

Le train 400 comprend un groupe 404 de quatre essieux moteurs au niveau de la voiture 406 se trouvant à l'avant du train 400 et un groupe 408 de quatre essieux moteurs se trouvant au niveau de la voiture 410 se trouvant à l'arrière du train 400, les autres voitures comprenant des essieux 412 non moteurs, également appelés des essieux porteurs.

Sur la FIGURE 4a, il n'y a aucune perte d'adhérence est chaque groupe 404 et 408 d'essieux moteurs 406 supporte 50% de l'effort de traction total.

Une perte d'adhérence est détectée au niveau du groupe 404 d'essieux moteurs de la voiture avant 406.

Sur la FIGURE 4b, un transfert d'une partie de l'effort de traction du groupe 404 d'essieux moteurs de la voiture avant 406 est réalisé vers le groupe 408 d'essieux moteurs de la voiture arrière 408, de sorte que l'effort de traction total est conservé. En particulier, après redistribution d'efforts :
- l'effort de traction demandé au groupe 404 d'essieux moteurs de la voiture avant 406 est diminué à hauteur de 10% de l'effort de traction total du train 400, de sorte que le groupe 404 d'essieux moteurs supporte 40% de l'effort de traction total du train 400 ; et
- l'effort de traction demandé au groupe 408 d'essieux moteurs de la voiture arrière 410 est augmenté à hauteur de 10% de l'effort de traction total du train 400, de sorte que le groupe 408 d'essieux moteurs supporte 60% de l'effort de traction total du train 400.

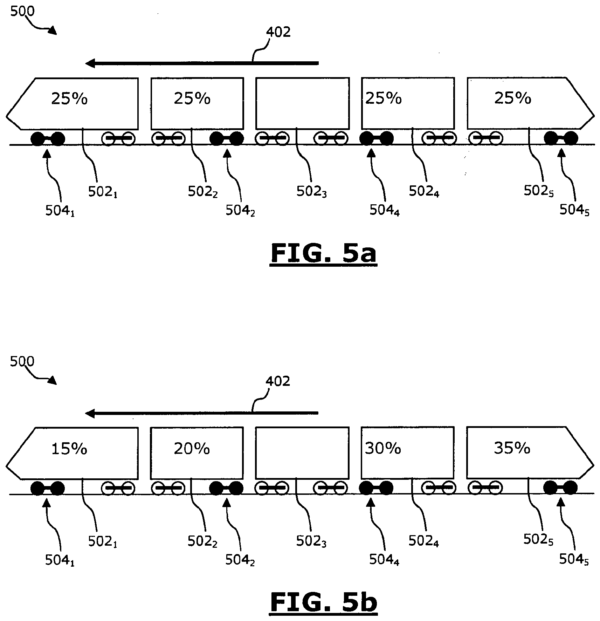

Les FIGURES 5a et 5b sont une représentation schématique d'un deuxième exemple non limitatif de contrôle d'adhérence selon l'invention.

L'exemple décrit sur les FIGURES 4a et 4b concerne un train 500 selon l'invention circulant dans le sens indiqué par la flèche 402.

Le train 500 comprend cinq voitures 502₁-502₅. Chacune des voitures 502₁,502₂, 502₄ et 502₄ comprend un groupe, respectivement 504₁,504₂, 504₄ et 504₄, de deux essieux moteurs. La voiture 502₃ se trouvant au milieu du train ne comprend pas d'essieux moteurs.

Sur la FIGURE 5a, il n'y a aucune perte d'adhérence et chaque groupe 504₁,504₂, 504₄ et 504₄ d'essieux moteurs supporte 25% de l'effort de traction total.

Une perte d'adhérence est détectée au niveau du groupe 504₁ d'essieux moteurs de la voiture avant 502₁ du train et au niveau du groupe 504₂ d'essieux moteurs de la deuxième voiture 502₂ du train.

Sur la FIGURE 5b, un transfert d'une partie de l'effort de traction de chacun des groupes 504₁ et 504₂ d'essieux moteurs est réalisé vers les groupes 504₄ et 504₅ d'essieux moteurs, de sorte que l'effort de traction global du train est conservé. En particulier, après redistribution des efforts :
- l'effort de traction demandé au groupe 504₁ d'essieux moteurs de la voiture avant 502₁ est diminué à hauteur de 10% de l'effort de traction total du train 500, de sorte que le groupe 504₁ d'essieux moteurs supporte 15% de l'effort de traction total du train 500 ;
- l'effort de traction demandé au groupe 504₂ d'essieux moteurs de la deuxième voiture 502₂ est diminué à hauteur de 5% de l'effort de traction total du train 500, de sorte que le groupe 504₂ d'essieux moteurs supporte 20% de l'effort de traction total du train 500 ;
- l'effort de traction demandé au groupe 504₄ d'essieux moteurs de l'avant dernière voiture 502₄ est augmenté à hauteur de 5% de l'effort de traction total du train 500, de sorte que le groupe 504₄ d'essieux moteurs supporte 30% de l'effort de traction total du train 500 ; et
- l'effort de traction demandé au groupe 504₅ d'essieux moteurs de la dernière voiture 502₅ est augmenté à hauteur de 10% de l'effort de traction total du train 500, de sorte que le groupe 504₅ d'essieux moteurs supporte 30% de l'effort de traction total du train 500.

Bien entendu l'invention n'est pas limitée aux exemples qui viennent d'être décrits, pourvu qu'ils soient couverts par les revendications.

## Revendications

1. Procédé (100) de contrôle de l'adhérence rail-roue d'un véhicule ferroviaire (302 ; 400 ; 500) comprenant au moins deux essieux moteurs (310, 312 ; 404, 408 ; 504), ledit procédé (100) comprenant :
- une étape (102) de détection d'une adhérence rail-roue dégradée au niveau d'au moins un essieu moteur (404 ; 504₁, 504₂), dit dégradé, dudit véhicule ferroviaire (302 ; 400 ; 500) ;
- une étape (104-110) de redistribution d'efforts comprenant :
▪ une diminution d'un effort demandé audit au moins un essieu moteur dégradé (404 ; 504₁, 504₂) ;
**caractérisé en ce que** l'étape de redistribution d'efforts comprend en outre
▪ une augmentation d'un effort demandé à au moins un des autres essieux moteurs (408 ; 504₄, 504₅).

2. Procédé (100) selon la revendication 1, **caractérisé en ce que** l'étape (104-110) de redistribution d'efforts est réalisée de sorte que la somme des efforts demandés à l'ensemble des essieux moteurs (310, 312 ; 404, 408 ; 504) dudit véhicule ferroviaire (302 ; 400 ; 500) reste sensiblement inchangée.

3. Procédé (100) selon l'une quelconque des revendications précédentes, **caractérisé en ce que** l'étape (104-110) de redistribution d'efforts comprend une augmentation de l'effort demandé à au moins un essieu moteur (408 ; 504₄, 504₅) se trouvant en aval de l'au moins un essieu dégradé (404 ; 504₁, 504₂) par rapport au dernier sens de circulation (402) connu du véhicule ferroviaire (302 ; 400 ; 500).

4. Procédé (100) selon l'une quelconque des revendications précédentes, **caractérisé en ce que** l'effort est diminué au niveau d'au moins un essieu moteur (404 ; 504₁, 504₂), en particulier de tous les essieux moteurs (404 ; 504₁, 504₂), d'un bogie se trouvant à l'avant du véhicule ferroviaire (302 ; 400 ; 500) et augmenté au niveau d'au moins un essieu moteur (408 ; 504₄, 504₅), en particulier de tous les essieux moteurs, d'un bogie se trouvant à l'arrière du véhicule ferroviaire (302 ; 400 ; 500), par rapport au dernier sens de circulation (402) connu du véhicule ferroviaire.

5. Procédé (100) selon l'une quelconque des revendications précédentes, **caractérisé en ce que** l'effort est augmenté au niveau d'au moins deux, en particulier de tous les, essieux moteurs (408 ; 504₄, 504₅) autres que l'au moins un essieu dégradé (404 ; 504₁, 504₂).

6. Procédé (100) selon l'une quelconque des revendications précédentes, **caractérisé en ce que** l'effort est augmenté au niveau d'au moins deux, en particulier de tous les, essieux moteurs autres que l'au moins un essieu dégradé de manière uniforme.

7. Procédé (100) selon l'une quelconque des revendications précédentes, **caractérisé en ce que** l'effort est augmenté au niveau d'au moins deux, en particulier de tous les, essieux moteurs (504₄, 504₅) autres que l'au moins un essieu dégradé (504₁, 504₂) en fonction de la position de chacun desdits au moins deux essieux moteurs (504₄, 504₅).

8. Procédé (100) selon l'une quelconque des revendications précédentes, **caractérisé en ce que** l'effort est diminué, respectivement augmenté, au niveau d'un essieu moteur, d'une valeur prédéterminée.

9. Procédé (100) selon l'une quelconque des revendications 1 à 7, **caractérisé en ce que** l'effort est diminué, respectivement augmenté, au niveau d'un essieu moteur, en fonction d'une donnée, dite coefficient de pondération, relative à l'adhérence rail-roue au niveau dudit essieu moteur.

10. Procédé (100) selon l'une quelconque des revendications précédentes, **caractérisé en ce que** l'étape de détection (102) comprend :
- une détection d'une perte d'adhérence d'au moins un essieu moteur, et/ou
- une mesure d'une adhérence maximale d'au moins un, de préférence de chaque, essieu moteur du véhicule ferroviaire, et/ou
- une détermination d'une donnée relative à une quantité/pourcentage d'adhérence perdue ou restante pour au moins un essieu moteur.

11. Procédé (100) selon l'une quelconque des revendications précédentes, **caractérisé en ce que** l'effort demandé est un effort de traction ou un effort de freinage.

12. Système (300) comprenant des moyens (314, 316) configurés pour mettre en œuvre les étapes du procédé (100) selon l'une quelconque des revendications précédentes.

13. Véhicule ferroviaire (302 ; 400 ; 500) équipé par un système (300) selon la revendication précédente.

## Patentansprüche

1. Verfahren (100) zur Kontrolle der Schienen-Rad-Haftung eines Schienenfahrzeugs (302; 400; 500) mit mindestens zwei Antriebsachsen (310, 312; 404, 408; 504), wobei das Verfahren (100) umfasst:
- einen Schritt (102) der Erfassung einer verschlechterten Schienen-Rad-Haftung an mindestens einer als verschlechtert bezeichneten Antriebsachse (404; 504₁, 504₂) des Schienenfahrzeugs (302; 400; 500);
- einen Schritt (104-110) der Kraftumverteilung, umfassend:
▪ eine Verringerung einer angeforderten Kraft an der mindestens einen verschlechterten Antriebsachse (404; 504₁, 504₂);
**dadurch gekennzeichnet, dass** der Schritt der Kraftumverteilung weiterhin umfasst
▪ eine Erhöhung einer angeforderten Kraft an mindestens einer der anderen Antriebsachsen (408; 504₄, 504₅).

2. Verfahren (100) nach Anspruch 1, **dadurch gekennzeichnet, dass** der Schritt (104-110) der Kraftumverteilung so durchgeführt wird, dass die Summe der von allen Antriebsachsen (310, 312; 404, 408; 504) des Schienenfahrzeugs (302; 400; 500) angeforderten Kräfte im Wesentlichen unverändert bleibt.

3. Verfahren (100) nach einem der vorhergehenden Ansprüche, **dadurch gekennzeichnet, dass** der Schritt (104-110) der Kraftumverteilung eine Erhöhung der angeforderten Kraft an mindestens einer Antriebsachse (408; 504₄, 504₅) umfasst, die mindestens der einen verschlechterten Achse (404; 504₁, 504₂) in Bezug auf die letzte bekannte Fahrtrichtung (402) des Schienenfahrzeugs (302; 400; 500) nachgelagert ist.

4. Verfahren (100) nach einem der vorhergehenden Ansprüche, **dadurch gekennzeichnet, dass** die Kraft an mindestens einer Antriebsachse (404; 504₁, 504₂), insbesondere an allen Antriebachsen (404; 504₁, 504₂), eines Drehgestells, das sich am Bug des Schienenfahrzeugs (302, 400, 500) befindet, verringert und an mindestens einer Antriebsachse (408; 504₄, 504₅), insbesondere an allen Antriebsachsen, eines Drehgestells, das sich am Heck des Schienenfahrzeugs (302; 400; 500) befindet, in Bezug auf die letzte bekannte Fahrtrichtung (402) des Schienenfahrzeugs erhöht wird.

5. Verfahren (100) nach einem der vorhergehenden Ansprüche, **dadurch gekennzeichnet, dass** die Kraft an mindestens zwei, insbesondere an allen Antriebsachsen (408; 504₄, 504₅) außer der mindestens einen verschlechterten Achse (404; 504₁, 504₂) erhöht wird.

6. Verfahren (100) nach einem der vorhergehenden Ansprüche, **dadurch gekennzeichnet, dass** die Kraft an mindestens zwei, insbesondere an allen Antriebsachsen außer der mindestens einen verschlechterten Achse gleichmäßig erhöht wird.

7. Verfahren (100) nach einem der vorhergehenden Ansprüche, **dadurch gekennzeichnet, dass** die Kraft an mindestens zwei, insbesondere an allen Antriebsachsen (504₄, 504₅) außer der mindestens einen verschlechterten Achse (504₁, 504₂) in Abhängigkeit von der Position jeder der mindestens zwei Antriebsachsen (504₄, 504₅) erhöht wird.

8. Verfahren (100) nach einem der vorhergehenden Ansprüche, **dadurch gekennzeichnet, dass** die Kraft an einer Antriebsachse um einen vorbestimmten Wert verringert bzw. erhöht wird.

9. Verfahren (100) nach einem der Ansprüche 1 bis 7, **dadurch gekennzeichnet, dass** die Kraft an einer Antriebsachse in Abhängigkeit von einer als Gewichtungskoeffizient bezeichneten Größe, die sich auf die Haftung zwischen Schiene und Rad im Bereich der Antriebsachse bezieht, verringert bzw. erhöht wird.

10. Verfahren (100) nach einem der vorgehenden Ansprüche, **dadurch gekennzeichnet, dass** der Erfassungsschritt (102) umfasst:
- eine Erfassung eines Haftungsverlustes mindestens einer Antriebsachse, und/oder
- eine Messung einer maximalen Haftung mindestens einer, vorzugsweise jeder Antriebsachse des Schienenfahrzeugs, und/oder
- eine Bestimmung einer Größe, die sich auf eine Menge/einen Prozentsatz der verlorenen oder verbleibenden Haftung für mindestens eine Antriebsachse bezieht.

11. Verfahren (100) nach einem der vorhergehenden Ansprüche, **dadurch gekennzeichnet, dass** die angeforderte Kraft eine Zugkraft oder eine Bremskraft ist.

12. System (300), umfassend Mittel (314, 316), die so konfiguriert sind, dass sie die Schritte des Verfahrens (100) nach einem der vorhergehenden Ansprüche ausführen.

13. Schienenfahrzeug (302; 400; 500), das mit einem System (300) nach vorhergehendem Anspruch ausgestattet ist.

## Claims

1. Method (100) for checking the rail-wheel grip of a rail vehicle (302; 400; 500) comprising at least two driving axles (310, 312; 404, 408; 504), said method (100) comprising:
- a step (102) of detecting a degraded rail-wheel grip at least at one driving axle (404; 504₁, 504₂), referred to as degraded, of said rail vehicle (302; 400; 500);
- a step (104-110) of redistributing forces, comprising:
▪ reducing a force required from said at least one degraded driving axle (404; 504₁, 504₂);
**characterized in that** the force redistribution step further comprises:
▪ increasing a force required from at least one of the other driving axles (408; 504₄, 504₅).

2. Method (100) according to claim 1, **characterized in that** the step (104-110) of redistributing forces is carried out such that the sum of the forces required from all of the driving axles (310, 312; 404, 408; 504) of said rail vehicle (302; 400; 500) remains substantially unchanged.

3. Method (100) according to any of the preceding claims, **characterized in that** the step (104-110) of redistributing forces comprises increasing the force required from at least one driving axle (408; 504₄, 504₅) located downstream of the at least one degraded axle (404; 504₁, 504₂) relative to the last known direction of travel (402) of the rail vehicle (302; 400; 500).

4. Method (100) according to any of the preceding claims, **characterized in that** the force is reduced at least at one driving axle (404; 504₁, 504₂), in particular at all of the driving axles (404; 504₁, 504₂), of a bogie located at the front of the rail vehicle (302; 400; 500) and increased at least at one driving axle (408; 504₄, 504₅), in particular at all of the driving axles, of a bogie located at the rear of the rail vehicle (302; 400; 500), relative to the last known direction of travel (402) of the rail vehicle.

5. Method (100) according to any of the preceding claims, **characterized in that** the force is increased at least at two, in particular at all, of the driving axles (408; 504₄, 504₅) other than the at least one degraded axle (404; 504₁, 504₂).

6. Method (100) according to any of the preceding claims, **characterized in that** the force is increased at least at two, in particular at all, of the driving axles other than the at least one degraded axle uniformly.

7. Method (100) according to any of the preceding claims, **characterized in that** the force is increased at least at two, in particular at all, of the driving axles (504₄, 504₅) other than the at least one degraded axle (504₁, 504₂) on the basis of the position of each of said at least two driving axles (504₄, 504₅).

8. Method (100) according to any of the preceding claims, **characterized in that** the force is decreased or increased, respectively, at a driving axle, by a predetermined value.

9. Method (100) according to any of claims 1 to 7, **characterized in that** the force is decreased or increased, respectively, at a driving axle, on the basis of a datum, referred to as the weighting coefficient, relative to the rail-wheel grip at said driving axle.

10. Method (100) according to any of the preceding claims, **characterized in that** the detection step (102) comprises:
- detecting a loss of grip of at least one driving axle; and/or
- measuring a maximum grip of at least one, preferably each, driving axle of the rail vehicle; and/or
- determining a datum relating to a quantity/percentage of grip lost or remaining for at least one driving axle.

11. Method (100) according to any of the preceding claims, **characterized in that** the force required is a tensile stress or a braking force.

12. System (300) comprising means (314, 316) configured to implement the steps of the method (100) according to any of the preceding claims.

13. Rail vehicle (302; 400; 500) equipped with a system (300) according to the preceding claim.
